# EUROPEAN PATENT SPECIFICATION

(11) **EP 4 454 474 B1**
(45) Date of publication and mention of the grant of the patent: **13.05.2026**
(21) Application number: 24167652.7
(22) Date of filing: 28.03.2024
(51) Int. Cl.: A23G 1/00, A23G 1/54, A23G 3/50, A23G 3/54, A23G 3/34

(54) **METHOD FOR MAKING CONFECTIONS**
VERFAHREN ZUR HERSTELLUNG VON KONFEKT
PROCÉDÉ DE FABRICATION DE CONFISERIES

(30) Priority: 24.04.2023 JP 2023071073
(43) Date of publication of application: 30.10.2024
(73) Proprietor: Bandai Co., Ltd., Tokyo 111-8081 (JP)
(72) Inventor: NEGISHI, Atsushi, Tokyo, 111-8081 (JP)
(74) Representative: Studio Torta S.p.A.

(56) References cited:
- WO-A1-2015/124642
- US-A- 5 792 496
- US-A- 6 099 872
- ANONYMOUS: "Schoko Spass - das �berraschungsei von Lidl - Bauchladenblog", 26 July 2017 (2017-07-26), pages 1 - 16, XP093205907, Retrieved from the Internet <URL:https://bauchladenblog.de/das-ueberraschungsei-von-lidl/> [retrieved on 20230917]
- DATABASE GNPD [online] MINTEL; 25 September 2018 (2018-09-25), ANONYMOUS: "Chocolate Fun Eggs with Surprise", XP093205916, retrieved from https://www.gnpd.com/sinatra/recordpage/5999141/ Database accession no. 5999141

## Description

### CROSS-REFERENCE TO RELATED APPLICATION

The disclosure has as priority the Japanese Patent Application No. 2023-071073 filed April 24, 2023.

### TECHNICAL FIELD

The present invention relates to a method for making confections.

### BACKGROUND

Conventionally, there have been capsule-shaped confections, each of which contains an article(s) inside the capsule. For example, Utility Patent Application Publication No. S53-110977 discloses a capsule having a structure in which the article such as a figure (toy) is accommodated, and the exterior thereof is covered by a confection.

### SUMMARY

### TECHNICAL PROBLEM

In Utility Patent Application Publication No. S53-110977, the spherical capsule-shaped confection is formed by combining two hemispherical capsules. When removing the capsules, it is possible to break the confection to extract them, but this confection was merely unsatisfactory in terms of interest value when consumed alone.

WO 2015/124642 A1 discloses a process for producing hollow solid oral compositions obtained by joining two distinct, separately formed single-layer portions consisting of fat-based foods which, in turn, comprise two or more sub-portions of different colours.

It is an object of the present invention to provide a method for making the confections.

### SOLUTION TO PROBLEM

The present invention is disclosed in the appended claims.

One of the aspects, not part of the present invention, is a confection. In the present specification, the "confection" is defined as and includes any one of sweets such as candies, chocolates, cakes, cookies pancakes, and confectionery, and any food in which sugar is not contained such as snack food and the like. The confection comprises a main body which is spherical and hollow. The main body is made up of a first outer shell portion in a first color and a second outer shell portion in a second color, which is different from the first color, and a connecting portion provided between the first outer shell portion and the second outer shell portion has an outer peripheral surface without any step.

One aspect of the present invention is a method for manufacturing a confection.

The method for manufacturing a confection, comprises the following steps of:
a filling step (S2) of filling at the same time a first raw material (21b) in a first color into a first mold (41), and filling a second raw material (22b) in a second color into a second mold (42),
wherein the filling step (S2) includes a moving step (S1) of moving the first mold (41) and the second mold (42) in a direction intersecting with the conveying direction toward a filling port (46a) of the first raw material (21b) and that of the second raw material (22b);
a molding step (S3) of forming a first outer shell portion (21) having a hemispherical shape with an internal space (SP1) from the first raw material (21b) filled in the first mold (41), and forming a second outer shell portion (22) having a hemispherical shape with an internal space (SP1) from the second raw material (22b) filled in the second mold (42);
a container insertion step (S4) of inserting a container (10) into the internal space (SP1) of the formed first outer shell portion (21) or the formed second outer shell portion (22);
wherein the filling step (S2), the molding step (S3) and the container insertion step (S4) are executed simultaneously for the first and second molds (41, 42),
the method further comprising a connecting step (S7) of connecting the formed first outer shell portion (21) and the formed second outer shell portion (22) to form a spherical-shaped main body (20).

### ADVANTAGEOUS EFFECT OF INVENTION

According to the present invention, it is possible to provide a confection, which is excellent in handleability.

### BRIEF DESCRIPTION OF DRAWINGS

FIG. 1 is a perspective view of a confection;
FIG. 2 is a cross sectional view of a main part of the confection shown in FIG. 1;
FIG. 3 is an exploded perspective view thereof, showing an initial state where the confection shown in FIG. 1 is exploded;
FIG. 4 is an exploded perspective view thereof, showing a final disassembled state of the confection shown in FIG. 1;
FIG. 5 is a schematic perspective view of shaping molds arranged at time when confections are manufactured, as an example;
FIG. 6 is a flowchart of an example of a method of manufacturing confections;
FIGS. 7A is a schematic perspective view illustrating an example of a moving step at time of filling of raw material during confection manufacturing;
FIGS. 7B is a side view illustrating an example of a moving step at time when the raw material is filled during confection manufacturing;
FIG. 8 is a schematic side view showing a molding step of a first outer shell part and a second outer shell part;
FIG. 9 is a schematic side view showing a state where a container is provided into each of the molds; and
FIG. 10 is a schematic view showing an example of a reversal step at time of confection manufacture.

### DETAILED DESCRIPTION

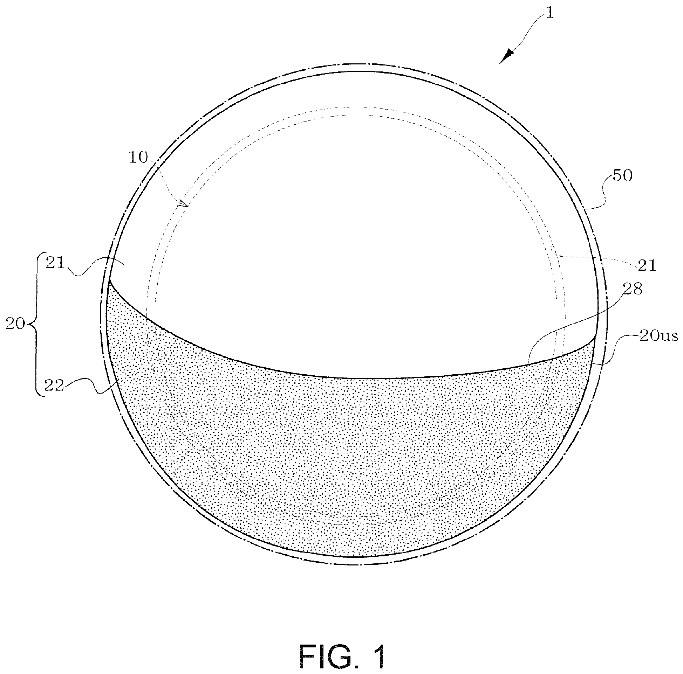

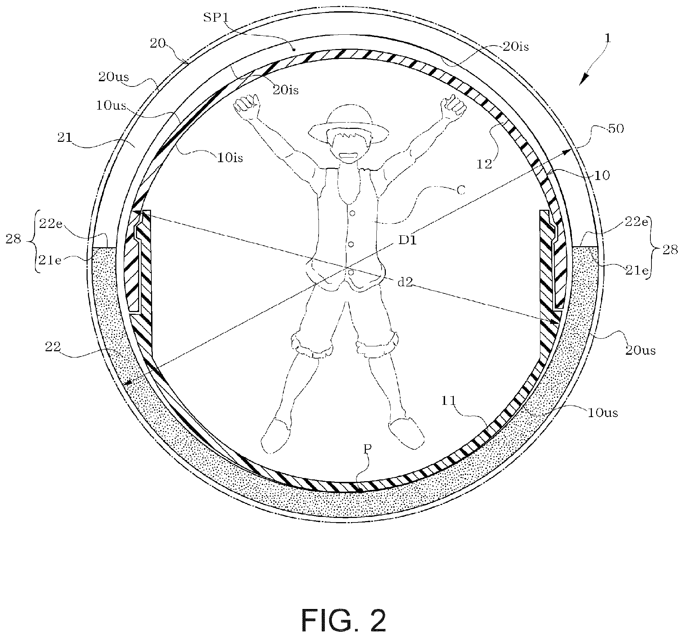

An embodiment will be explained below, referring to attached drawings. FIG. 1 is a perspective view of a confection according to an embodiment of the present invention. FIG. 2 is a cross sectional view of a main part of the confection shown in FIG. 1.

As shown in FIGS. 1 and 2, the confection 1 has a spherical external shape and comprises a body portion 20, which is hollow and accommodates a spherical container 10. This body portion 20 is, for example, a chocolate confection made up of a white first outer shell part 21 and a black second outer shell part 22, wherein the color of the first outer shell part 21 is different from that of the first shell part 21. The first outer shell part 21 and the second outer shell part 22 are made of material with different flavors, and for instance, the white first outer shell part 21 is made of white chocolate, and the second outer shell part 22 shown in black is made of milk chocolate, wherein the amount of the white chocolate is equal to that of the milk chocolate. The container 10 is made of a hard material such as synthetic resin.

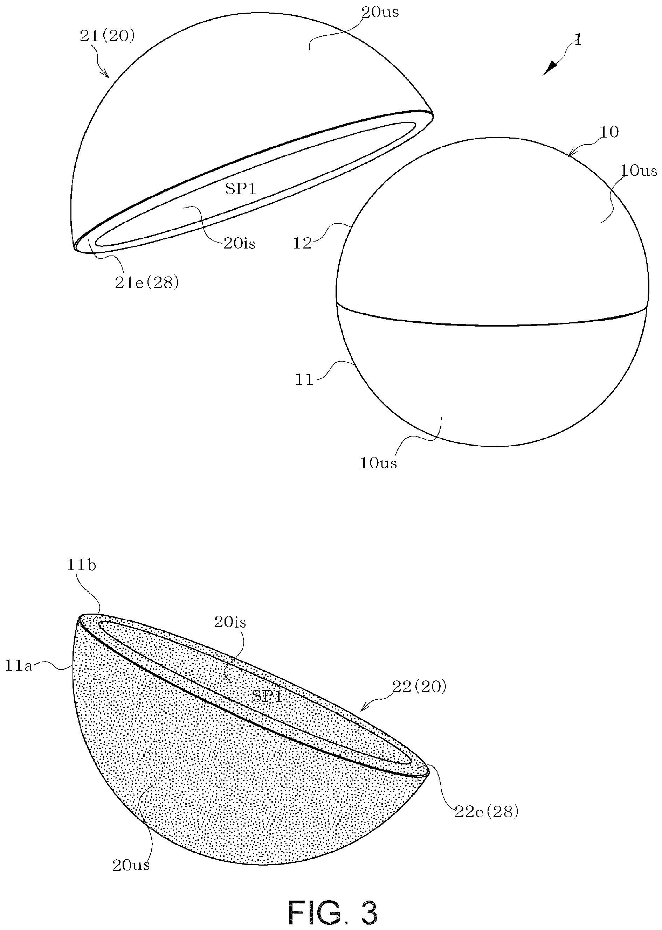

Here, the body portion 20 has a connecting portion 28 between the first outer shell part 21 and the second outer shell part 22 which are connected to each other without any step, through a manufacturing method described later. Therefore, the connecting portion 28, which is the boundary of the two-color separation, forms part of an outer peripheral surface 20us in a clean spherical shape without any step, and the internal space SP1 (refer to FIG. 3) has also a spherical space without any step.

The body portion 20 is opaque and made of a chocolate confection. The container 10 accommodated inside the body portion 20 is made invisible in a state where the first outer shell part 21 and the second outer shell part 22 are connected to each other. Additionally, the entire outer peripheral surface 20us of the body portion 20 is covered with a covering member 50. This covering member 50 is composed of opaque wrapping paper or a wrapping film with colored patterns, so that the body portion 20 is not visible from the outside."

Additionally, the covering member 50 is provided so as to be attached firmly to the outer peripheral surface 20us of the body portion 20. Therefore, since the body portion 20 is wrapped with the covering member 50, the confection 1 can be rolled and played with before consumption.

As shown in FIG. 2, the body portion 20 is configured such that only part (a lower end P in the figure) of the outer peripheral surface 10us of the container 10 is brought in contact with the inner peripheral surface 20is of the body portion 20 in a first state before disassembly or destruction thereof. That is, the size of the internal space SP1 of the body portion 20 is set so that a gap is formed by taking the outer diameter size of the container 10 into consideration.

Thus, in the first state, the body portion 20 can directly accommodate the container 10 within the internal space SP1 and the container 10 can be swung within the internal space SP1. For instance, by shaking the body portion 20. the inner peripheral surface 20is of the body portion 20 is brough in contact with the outer peripheral surface 10us of the container 10, thereby generating sound.

When the maximum length D1 of the body portion 20 is set in a range, for example, of 4 cm to 6 cm, the maximum diameter d2 of the container 10 accommodated inside the body portion 20 is set in a range of 3 cm to 5 cm.

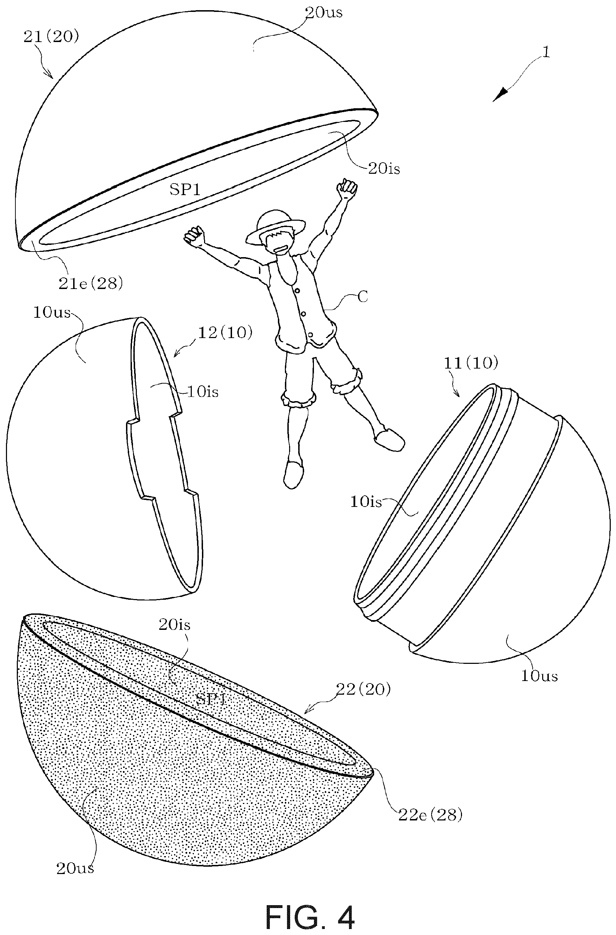

FIG. 3 is an exploded perspective view showing an initial state of a disassembled confection 1, and FIG. 4 is an exploded perspective view showing a final state of the disassembled confection 1. To disassemble the confection 1, after removing the covering member 50, the body portion 20 is divided so as to be turned into a second state, as shown in FIG. 3, thereby allowing separation of the container 10 from the body portion 20 for consumption and removal of the container 10.

First, when the body portion 20 is disassembled, as shown in FIG. 3, the hemispherical first outer shell part 21 and hemispherical second outer shell part 22 which are identical in shape can be cleanly separated from each other by, for example, applying a force near the connecting portion 28. In the manufacturing method described later, the connecting portion 28 is configured so as to be separated more easily than other parts.

Next, as shown in FIG. 4, the container 10 accommodated in the body portion 20 is disassembled. The container 10 is made up, for example, of two parts, the first main part 11 and the second main part 12. By disassembling these parts, an article C, which is a specific character figure, and is contained in the container 10 can be taken therefrom. In this non-rolling second state after the disassembly, the body portion 20 can be consumed, and the article C inside the container 10 can be played with. Various figures are prepared for such an article C, and one of them is enclosed in the container 10. Thus, one can enjoy both consuming the confection 1 and collecting the figures.

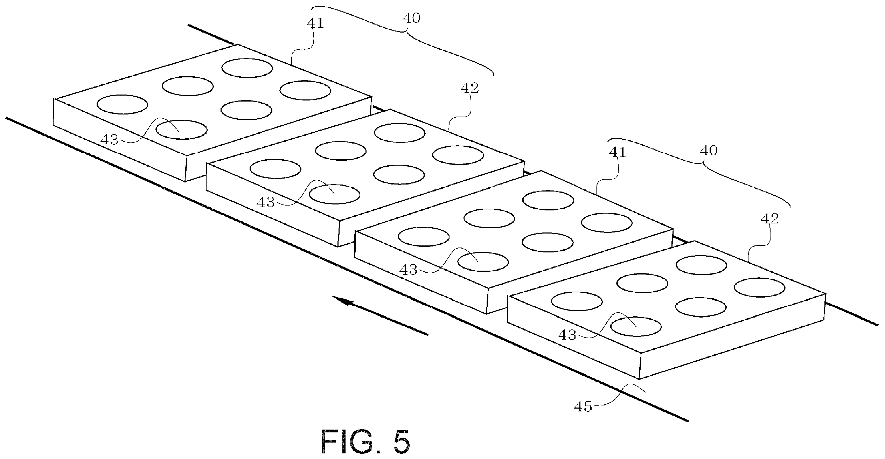

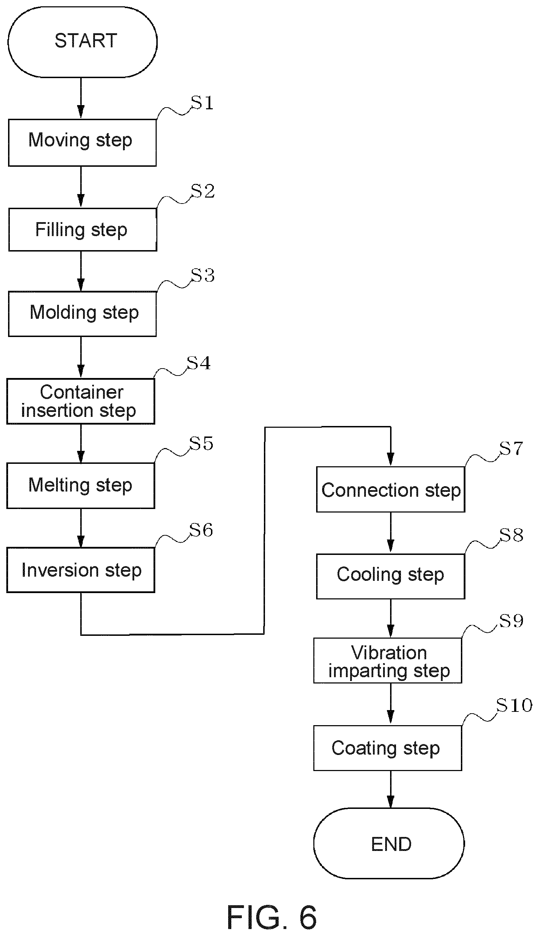

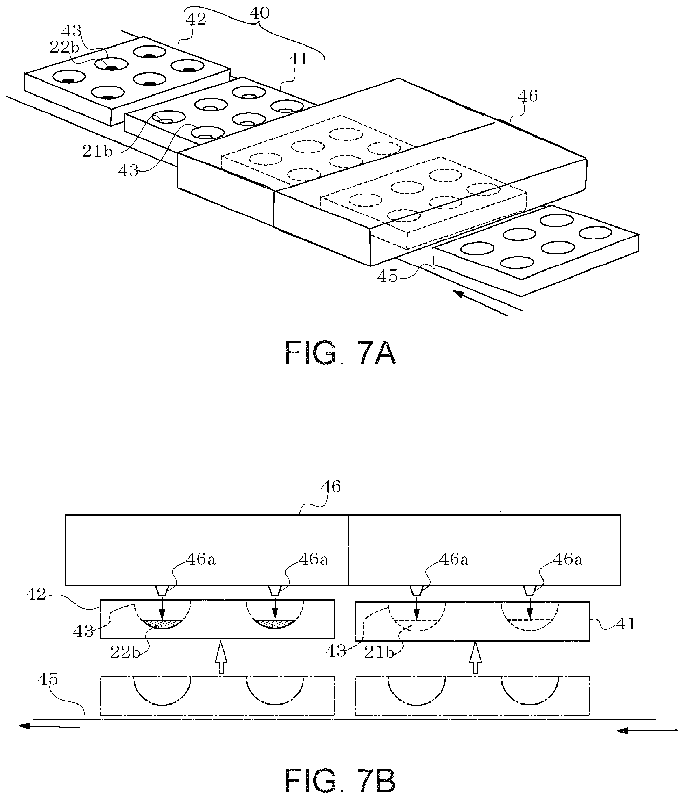

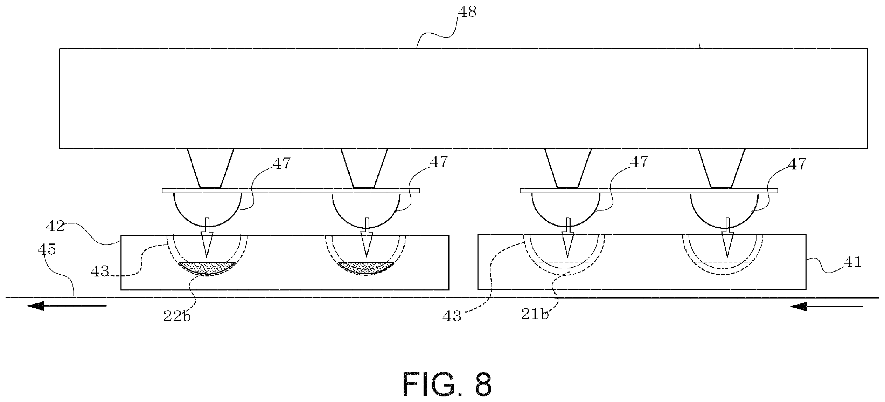

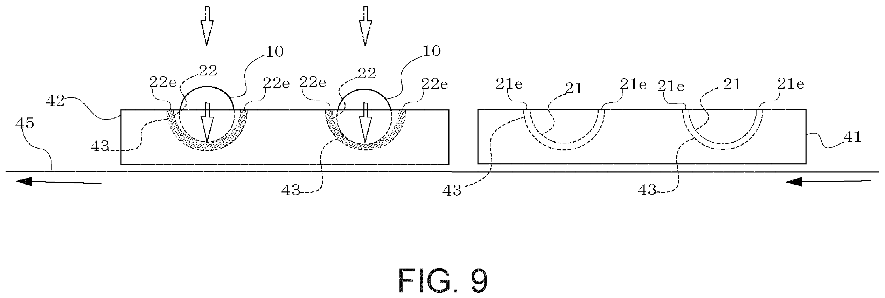

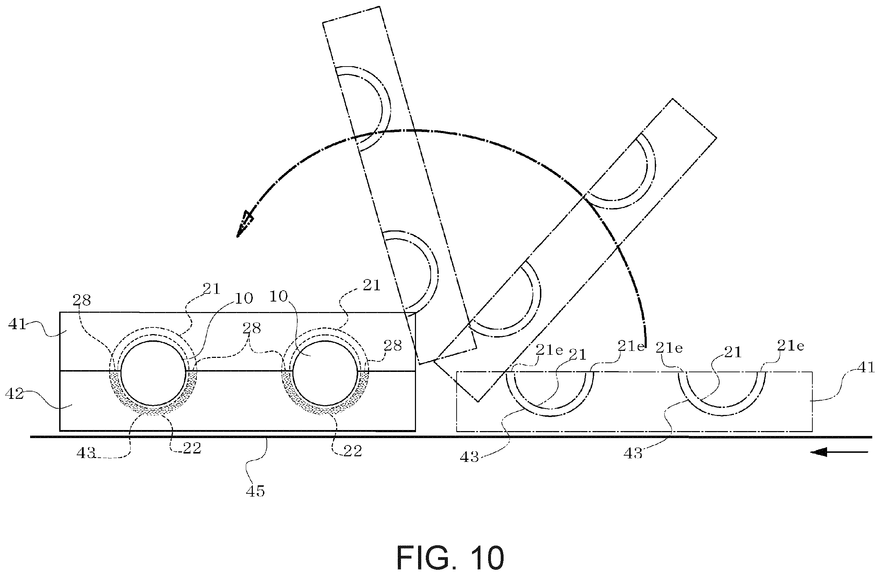

A manufacturing method of such a confection 1 will be explained referring to FIGS. 5-10. FIG. 5 is a schematic perspective view of shaping molds placed on a conveyance path 45, and an example of a state of arrangement thereof at time when confections are manufactured. FIG. 6 is a flowchart of an example of the method for manufacturing confections. FIGS. 7A and 7B respectively show a perspective view and a side view, illustrating an example of a moving step at time when raw material is filled during the confection manufacturing. FIG. 8 is a schematic side view showing a molding step of hemispherical outer shell parts. FIG. 9 is a schematic side view of a state where a container is provided into the mold. FIG. 10 is a schematic view of an example of an inversion step at time of the confection manufacture.

A shaping mold 40, which forms the shape of the confections 1, comprises a first mold 41 and a second mold 42. All steps of the manufacturing method described below are performed while the first mold 41 and the second mold 42 are moved in a state where they are in series aligned on a continuously formed conveyance path 45. As shown in FIG. 5, each of the shaping molds 40 is made up of the first mold 41 and the second mold 42, which are aligned in a conveying direction (in a direction shown by an arrow) of the conveyance path 45 and are configured to form a pair. In addition, the first mold 41 and the second mold 42 are alternatively arranged in the conveying direction. In addition, both the first and second molds 41 and 42 respectively include one or a plurality of hemispherical concave portions 43, each of which forms the outer shape of a confection 1 (in this embodiment, the number of the concave portions is six).

As shown in FIG. 6, a manufacturing process including, for example, steps S1 to S10 is carried out on the shaping molds 40 which are transported by the conveying path 45 in order produce confections 1.

First, in the step S1, a moving step is carried out on the shaping molds 40 which have been transported onto the conveying path 45. As shown in FIG. 7A, this moving step is carried out in an area where a filling device 46, which fills melted chocolate raw material, and which is provided on the upper side of the conveying path 45, is provided. For example, the shaping molds 40 which have come directly below the filling device 46 are moved upward by a moving device (not shown) as shown in FIG. 7B from the conveying surface (in an upper direction from a conveying face of the conveying path 45). By this movement, the first mold(s) 41 and the second mold(s) 42 of the concave portions 43 approach towards filling openings 46a of the filling device 46 (Refer to FIG. 7B).

In the step S2, the filling step of chocolate raw materials is carried out. Specifically, in a state where the shaping mold 40 is close to the filling openings 46a, first material (white) 21b is filled into the concave portions 43 of the first mold 41, and second material (black) 22b is filled into the concave portions 43 of the second mold 42. Subsequently, the shaping mold(s) 40 filled with these raw materials is lowered and returned onto the conveying path 45, and then transferred to the next process.

In the step S3, the molding step of the hemispherical-shaped first outer shell part 21 and the hemispherical-shaped second outer shell part 22 is conducted. As shown in FIG. 8, this molding step involves a step of lowering hemispherical convex molds 47 provided in a molding machine 48, for example, located above the conveying path 45, towards the first mold 41 and the second mold 42 on the conveyance path 45. As a result, the raw material accumulated at the bottom of each of the concave portions 43 in the previous step is pushed and spread into the molding space between the concave portion 43 and the convex mold 47. Subsequently, the convex mold 47 rises back to its standby position. Consequently, the hemispherical-shaped first outer shell part 21 and the hemispherical-shaped second outer shell part 22, each of which has an internal space, are molded.

In the step S4, a container insertion step is carried out. Specifically, as shown in FIG. 9, a container 10 containing an article C is inserted from above into the hemispherical internal space of, for example, each of the second outer shell parts 22. It should be noted that the mold where the container 10 is inserted is shown as the second mold 42, which will be a lower side in a subsequent inversion step, however, if the first mold 41 becomes the lower side during inversion, the mold the containers 10 are inserted will be a first mold 41.

In a step S5, a melting step is conducted. This melting step involves a step of reheating an opening end 21e of each of the first outer shell parts 21, and an opening end 22e of each of the second outer shell part 22 where the container 10 is inserted, after a natural cooling step, or forced cooling process. (Refer to FIG. 9.)

In a step S6, an inversion step is conducted. As shown in FIG. 10, this inversion step involves, a step of inverting the first mold 41 on the conveyance path 45 so as to cover the second mold 42 by an inverting device (not shown). As a result, the first mold 41 and the second mold 42 are vertically overlapped with each other. Consequently, the opening end 21e of the first outer shell part 21 and the opening end 22e of the second outer shell part 22 come into contact with each other.

In a step S7, a connection step is conducted following the inversion step without performing any step between the inversion step and this connection step. The contact state between the opening end 21e of the first outer shell part 21 and the opening end 22e of the second outer shell part 22 is maintained, thereby forming a main body 20, which has a connecting portion 28 by which the first outer shell part 21 and the second outer shell part 22 are connected to each other.

Here, the strength of the connecting portion 28 can be set based on the degree of re-melting of the opening ends 21e, 22e. For example, only the opening ends 21e, 22e are reheated when both of the outer shell parts 21, 22 are in a cooled and solidified state. While the strength of the connection can be set higher when the melting temperature at the reheating is high, a separation of the opening end 21e from the opening end 22e at the connecting portion 28 can be made easier when the melting temperature is low. Thus, by reheating only the surfaces of the opening ends 21e, 22e, it is possible to create a condition where the opening ends 21e, 22e can be separated from each other at the connecting portion, more easily than at other parts which are entirely solidified from the melted state.

In the step S8, a forced cooling step is conducted. In this cooling step, the main body 20 is rapidly cooled, thereby expediting subsequent steps. Additionally, the cooling step may be provided before the step S5, as mentioned above. In such case, it is possible to reheat them fast.

In a step S9, a vibration imparting step is conducted. In this step, vibration is imparted to the stacked first and second molds 41 and 42 (the shaping mold 40) to facilitate removal of the main body 20 from the shaping molds 40.

In a step S10, a coating step for coating the main body 20 is conducted. Prior to this coating step, the first mold 41, which covers the second mold42, is returned to its original position to open the shaping mold 40, by rotating and moving the first mold 41. In this state, the main bodies 20 are removed from the second mold 42 by using, for example, a suction means, and are coated with the coating member 50 on its outer peripheral surface 20us. The coated main body 20 is then transferred to another transfer path from the conveyance path 45 and packaged into cosmetic boxes or the like.

As described above, since the confection 1 according to this embodiment, comprises differently colored chocolates connected without steps, the confection 1 can be easily held and rolled even by infants and children. Moreover, since the two-colored chocolates can be neatly separated at the connecting portion, the infants and children can eat it, and enjoy the visual color combination. Furthermore, since the two colors of the outer shells are composed of different flavors, they can choose to enjoy multiple flavors separately or simultaneously. Since a character article C is enclosed in the container 10, it can be enjoyed as a character toy.

In addition, in the present embodiment, since the first outer shell portion 21 and the second outer shell portion 22 both have the same semi-spherical shape, two-colored confection 1 can have different flavors in equal amounts. Moreover, due to the configuration where they are easily separable at the connecting portion 28 located near the equator of the main body 20, the container 10 included thereinside can be reliably removed without destroying multiple parts of the main body 20. Furthermore, since the confection 1 enclosed thereinside cannot be seen from the outside of the main body 20, it can create a sense of anticipation about what is inside.

In this embodiment, since the container 10, including its constituents, is designed with hygiene in mind, the main body 20 can directly accommodate the container 10 without providing a packaging member around the container 10. Therefore, it is possible not only to prevent from accidentally eating such a packaging member but also to eliminate the need for removing the packaging member from the container 10.

In this embodiment, since the container 10 is configured to be swingable within the main body 20, the outer peripheral surface of the container 10 can be brought in contact with the inner peripheral surface of the main body 20 thereby generating a sound. Thus, it is possible to offer a confection 1 capable of generating a sound. Moreover, this configuration can prevent damage to the main body 20, caused by unexpected expansion of the container 10.

In this embodiment, since the container 10 contains one character article selected from multiple types of articles C, it is possible to offer an enjoyment of collecting multiple characters."

In the present embodiment, since the main body 20 is configured so as not to be visible from the outside in a state where the entire outer peripheral surface 20us of the main body 20 is covered by the covering member 50, the two colors of the content enclosed thereinside can be enjoyed by a viewer when it is opened.

In the present embodiment, since hemispherical molded confections made of different raw materials are combined with and connected to each other to form a spherical shape, by using two molds in the same shape in the manufacturing process, and the connecting portion 28 therebetween is configured so as to be easily separated from each other, it is possible to provide a confection 1 having two different color flavors, which can be enjoyed separately.

In the present embodiment, since the connection step includes the melting step for melting the opening end portion of each of the first outer shell portions 21 and that of each of the second outer shell portions 22 in a state where the first mold 41 and the second mold 42 are alternatively arranged one by one in a conveying direction thereof, connections between the opening end portions 21e in the first mold 41 and the opening end portions 22e in the second mold 42 can be easily achieved by simply flipping, upside down, one of the molds adjacent to each other. Additionally, this connection can be performed on the conveyance path 45 transporting both molds.

Since there is the moving step for moving the first mold 41 and the second mold 42 in a direction crossing the conveying direction (in an upward direction) so as to approach the filling ports 46a for filling the concave portions with the first raw material 21b and the second raw material 22b, the filling of materials can be reliably performed even while conveying.

In the present embodiment, as a post process after the connecting step, a vibration application step for applying vibration to the first mold 41 and the second mold 42 is included, which facilitates separation between the surface of the shaping mold 40 and the molded product, thereby enabling easy release.

In the present embodiment, as a post process after the connecting process, there is a covering step for covering the main body 20 by taking the main portions 20 from the first mold 41 or the second mold 42, and covering its outer peripheral surface 20us with the covering member 50, thereby ensuring food hygiene of the confection 1.

In the present embodiment, a cooling process(es) for cooling the first outer shell portion 21 and the second outer shell portion 22 is included before, after, or before and after the connecting process. For example, when such a cooling process is provided before the connecting process, the solidification before the melting process can be advanced, thus enlarging a range in which the connection strength (melting adjustment of the opening end portions) of the connecting portion 28 is adjusted. Conversely, when such a cooling process is provided after the connecting process, the connection, fixing and overall cooling of the first outer shell portion 21 and the second outer shell portion 22 and cooling can be accelerated, thereby enhancing productivity thereof.

In the present embodiment, all the steps are executed while the first mold 41 and the second mold 42 on a continuous conveyance path 45 while moving, thereby improving productivity thereof.

Although the embodiments of the present invention are described above, the present invention can be appropriately modified within the scope of its technical concept. For example, in the above embodiments, the colors of the confection are black and white, but these colors are not limited thereto and may be any suitable combination of colors, for example, purple, red, yellow, water blue, green, brown, and black.

Furthermore, in the manufacturing process in the above embodiment, the first mold 41 and the second mold 42 are arranged in a single row along the conveying direction, but the arrangement thereof is not limited thereto, and they may be arranged in two rows along the conveying direction.

## Claims

1. A method for manufacturing a confection, comprising the following steps of:
a filling step (S2) of filling at the same time a first raw material (21b) in a first color into a first mold (41), and filling a second raw material (22b) in a second color into a second mold (42),
wherein the filling step (S2) includes a moving step (S1) of moving the first mold (41) and the second mold (42) in a direction intersecting with the conveying direction toward a filling port (46a) of the first raw material (21b) and that of the second raw material (22b);
a molding step (S3) of forming a first outer shell portion (21) having a hemispherical shape with an internal space (SP1) from the first raw material (21b) filled in the first mold (41), and forming a second outer shell portion (22) having a hemispherical shape with an internal space (SP1) from the second raw material (22b) filled in the second mold (42);
a container insertion step (S4) of inserting a container (10) into the internal space (SP1) of the formed first outer shell portion (21) or the formed second outer shell portion (22);
wherein the filling step (S2), the molding step (S3) and the container insertion step (S4) are executed simultaneously for the first and second molds (41, 42),
the method further comprising
a connecting step (S7) of connecting the formed first outer shell portion (21) and the formed second outer shell portion (22) to form a spherical-shaped main body (20).

2. The method for manufacturing a confection according to claim 1, wherein the connecting step (S7) includes a melting step (S5) of melting an opening end portion (21e) of the first outer shell portion (21) and that of the second outer shell portion (22).

3. The method for manufacturing a confection according to claim 2, wherein the connecting step (S7) includes a reversal step (S6) of reversing the first mold (41) or the second mold (42) to bring the opening end portion (21e) of the first outer shell portion (21) and that of the second outer shell portion (22) into contact with each other.

4. The method for manufacturing confection according to claim 1, wherein the first mold (41) and the second mold (42) are arranged alternately in a conveying direction thereof.

5. The method for manufacturing confection according to any of the preceding claims, further comprising a vibration applying step (S9) of applying vibration to the first mold (41) and the second mold (42) after the connecting step (S7).

6. The method for manufacturing a confection according to claim 5, further comprising a covering step (S10) of taking out the main body (20) from the first mold (41) or the second mold (42) after the connecting step (S7) and covering an outer peripheral surface (20us) of the main body (20) with a covering member (50).

7. The method for manufacturing a confection according to claim 6, further comprising a cooling step (S8) of cooling the first outer shell portion (21) and the second outer shell portion (22) before, after, or before and after the connecting step (S7).

8. The method for manufacturing a confection according to claim 1, wherein all the steps (S1-S10) are performed on a continuous conveyance path (45) while the first mold (41) and the second mold (42) are moved thereby.

## Patentansprüche

1. Verfahren zur Herstellung einer Umhüllung, das die folgenden Schritte umfasst:
einen Füllschritt (S2) des gleichzeitigen Füllens eines ersten Rohmaterials (21b) in einer ersten Farbe in eine erste Form (41) und des Füllens eines zweiten Rohmaterials (22b) in einer zweiten Farbe in eine zweite Form (42),
wobei der Füllschritt (S2) einen Bewegungsschritt (S1) des Bewegens der ersten Form (41) und der zweiten Form (42) in eine Richtung beinhaltet, die sich mit der Förderrichtung hinführend zu einem Füllstutzen (46a) des ersten Rohmaterials (21b) und dem des zweiten Rohmaterials (22b) überschneidet;
einen Formungsschritt (S3) des Formens eines ersten Außenhüllenabschnitts (21), aufweisend eine Halbkugelform mit einem Innenraum (SP1), aus dem in die erste Form (41) gefüllten ersten Rohmaterial (21b) und des Formens eines zweiten Außenhüllenabschnitts (22), aufweisend eine Halbkugelform mit einem Innenraum (SP1), aus dem in die zweite Form (42) gefüllten zweiten Rohmaterial (22b);
einen Behältereinführungsschritt (S4) des Einführens eines Behälters (10) in den Innenraum (SP1) des geformten ersten Außenhüllenabschnitts (21) oder des geformten zweiten Außenhüllenabschnitts (22),
wobei der Füllschritt (S2), der Formungsschritt (S3) und der Behältereinführungsschritt (S4) für die erste und zweite Form (41, 42) gleichzeitig durchgeführt werden,
wobei das Verfahren ferner Folgendes umfasst:
einen Verbindungsschritt (S7) des Verbindens des geformten ersten Außenhüllenabschnitts (21) und des geformten zweiten Außenhüllenabschnitts (22), um einen halbkugelförmigen Hauptkörper (20) zu bilden.

2. Verfahren zur Herstellung einer Umhüllung nach Anspruch 1, wobei der Verbindungsschritt (S7) einen Schmelzschritt (S5) des Schmelzens eines Öffnungsendabschnitts (21e) des ersten Außenhüllenabschnitts (21) und dessen des zweiten Außenhüllenabschnitts (22) beinhaltet.

3. Verfahren zur Herstellung einer Umhüllung nach Anspruch 2, wobei der Verbindungsschritt (S7) einen Wendeschritt (S6) des Wendens der ersten Form (41) oder der zweiten Form (42) beinhaltet, um den Öffnungsendabschnitt (21e) des ersten Außenhüllenabschnitts (21) und den des zweiten Außenhüllenabschnitts (22) miteinander in Kontakt zu bringen.

4. Verfahren zur Herstellung einer Umhüllung nach Anspruch 1, wobei die erste Form (41) und die zweite Form (42) abwechselnd in deren Förderrichtung angeordnet sind.

5. Verfahren zur Herstellung einer Umhüllung nach einem der vorhergehenden Ansprüche, ferner umfassend einen Vibrationsbeaufschlagungsschritt (S9) des Beaufschlagens der ersten Form (41) und der zweite Form (42) mit Vibration nach dem Verbindungsschritt (S7).

6. Verfahren zur Herstellung einer Umhüllung nach Anspruch 5, ferner umfassend einen Abdeckschritt (S10) des Herausnehmens des Hauptkörpers (20) aus der ersten Form (41) oder der zweiten Form (42) nach dem Verbindungsschritt (S7) und des Abdeckens einer Außenumfangsoberfläche (20us) des Hauptkörpers (20) mit einem Abdeckelement (50).

7. Verfahren zur Herstellung einer Umhüllung nach Anspruch 6, ferner umfassend einen Kühlschritt (S8) des Kühlens des ersten Außenhüllenabschnitts (21) und des zweiten Außenhüllenabschnitts (22) vor, nach oder vor und nach dem Verbindungsschritt (S7).

8. Verfahren zur Herstellung einer Umhüllung nach Anspruch 1, wobei alle Schritte (S1-S10) auf einem durchgehenden Förderweg (45) durchgeführt werden, während die erste Form (41) und die zweite Form (42) dadurch bewegt werden.

## Revendications

1. Procédé de fabrication d'une confiserie, comprenant les étapes suivantes :
une étape de remplissage (S2) consistant à remplir simultanément une première matière première (21b) dans une première couleur dans un premier moule (41), et à remplir une seconde matière première (22b) dans une seconde couleur dans un second moule (42),
dans lequel l'étape de remplissage (S2) comprend une étape de déplacement (S1) consistant à déplacer le premier moule (41) et le second moule (42) dans une direction croisant la direction de transport vers un orifice de remplissage (46a) de la première matière première (21b) et celui de la seconde matière première (22b) ;
une étape de moulage (S3) consistant à former une première partie d'enveloppe extérieure (21) présentant une forme hémisphérique avec un espace interne (SP1) à partir de la première matière première (21b) remplie dans le premier moule (41), et à former une seconde partie d'enveloppe extérieure (22) présentant une forme hémisphérique avec un espace interne (SP1) à partir de la seconde matière première (22b) remplie dans le second moule (42) ;
une étape d'insertion de récipient (S4) consistant à insérer un récipient (10) dans l'espace interne (SP1) de la première partie d'enveloppe extérieure (21) formée ou de la seconde partie de l'enveloppe extérieure (22) formée ;
dans lequel l'étape de remplissage (S2), l'étape de moulage (S3) et l'étape d'insertion de récipient (S4) sont exécutées simultanément pour les premier et second moules (41, 42),
le procédé comprenant en outre
une étape de liaison (S7) consistant à relier la première partie d'enveloppe extérieure (21) formée et la seconde partie d'enveloppe extérieure (22) formée pour former un corps principal de forme sphérique (20).

2. Procédé de fabrication d'une confiserie selon la revendication 1, dans lequel l'étape de liaison (S7) comprend une étape de fusion (S5) consistant à fondre une partie d'extrémité d'ouverture (21e) de la première partie d'enveloppe extérieure (21) et de la seconde partie d'enveloppe extérieure (22).

3. Procédé de fabrication d'une confiserie selon la revendication 2, dans lequel l'étape de liaison (S7) comprend une étape d'inversion (S6) consistant à inverser le premier moule (41) ou le second moule (42) pour amener la partie d'extrémité d'ouverture (21e) de la première partie d'enveloppe extérieure (21) et celle de la seconde partie d'enveloppe extérieure (22) en contact l'une avec l'autre.

4. Procédé de fabrication d'une confiserie selon la revendication 1, dans lequel le premier moule (41) et le second moule (42) sont disposés alternativement dans une direction de transport de ceux-ci.

5. Procédé de fabrication d'une confiserie selon l'une quelconque des revendications précédentes, comprenant en outre une étape d'application de vibrations (S9) consistant à appliquer des vibrations au premier moule (41) et au second moule (42) après l'étape de liaison (S7).

6. Procédé de fabrication d'une confiserie selon la revendication 5, comprenant en outre une étape de recouvrement (S10) consistant à démouler le corps principal (20) du premier moule (41) ou du second moule (42) après l'étape de liaison (S7) et à recouvrir une surface périphérique extérieure (20us) du corps principal (20) avec un élément de recouvrement (50).

7. Procédé de fabrication d'une confiserie selon la revendication 6, comprenant en outre une étape de refroidissement (S8) consistant à refroidir la première partie d'enveloppe extérieure (21) et la seconde partie d'enveloppe extérieure (22) avant, après, ou avant et après l'étape de liaison (S7).

8. Procédé de fabrication d'une confiserie selon la revendication 1, dans lequel toutes les étapes (S1-S10) sont réalisées sur un chemin de transport continu (45) pendant que le premier moule (41) et le second moule (42) sont déplacés.
